# EUROPEAN PATENT SPECIFICATION

(11) **EP 4 440 337 B1**
(45) Date of publication and mention of the grant of the patent: **13.08.2025**
(21) Application number: 22823018.1
(22) Date of filing: 29.11.2022
(51) Int. Cl.: A23L 19/20, A23B 4/26

(54) **A PROCESS FOR PREPARING A MARINATED EXTRUDED PLANT-BASED FOOD PRODUCT**
VERFAHREN ZUR HERSTELLUNG EINES MARINIERTEN EXTRUDIERTEN LEBENSMITTELPRODUKTS AUF PFLANZLICHER BASIS
PROCÉDÉ DE PRÉPARATION D'UN PRODUIT ALIMENTAIRE EXTRUDÉ MARINÉ À BASE DE PLANTES

(30) Priority: 02.12.2021 EP 21212080
(43) Date of publication of application: 09.10.2024
(73) Proprietor: Société des Produits Nestlé S.A., 1800 Vevey (CH)
(72) Inventor: BETZ, Reinhold Willy, 78244 GOTTMADINGEN (DE); HOEGG, Elisabeth, 78464 Konstanz (DE); LINDIGKEIT, Peter, 78239 Rielasingen-W. (DE); HALDEN, Jonas, 78337 Öhningen (DE); SKIBA, Tomasz, 69214 Eppelheim (DE)
(74) Representative: Dinger, Hansjörg
(86) International application number: PCT/EP2022/083639
(87) International publication number: WO 2023/099458

(56) References cited:
- EP-A1- 2 636 314
- WO-A1-96/14760
- US-A1- 2015 296 835

## Description

The invention generally relates to a process for preparing a marinated extruded plant-based food product. More specifically the invention relates to a process for preparing a marinated extruded plant-based food product with a fibrous appearance and good juiciness and tenderness properties. WO 96/147 60 A1 discloses a method of extending the shelf-life of fresh foods. EP 2 636 314 A1 discloses discloses a method for producing a processed protein food. US 2015/296 835 A1 discloses a process for producing a nutrient-dense meat structured protein product.

In recent years, it has become common for consumers to choose foods that are convenient and tasty. However, convenient or ready-to-eat foods tend to be nutritionally unbalanced as they are high in fat and short-chain carbohydrates e.g. refined sugars, and low in dietary fiber and protein. In particularly, it is appreciated that the high fat and low dietary fiber level of these convenient foods can contribute to obesity and various chronic diseases, such as coronary heart disease, stroke, diabetes, and certain types of cancer.

It is well known that by supplementing foods with increased levels of dietary fiber and protein, taste can be seriously compromised as off-flavours result in a chalky and bland taste. In addition to the challenges associated with improving taste, it is known that increasing a food's protein level typically results in the loss of the desirable product texture that consumers expect. This is especially critical for extruded plant-based food product products.

Hence, there is an existing need in the art and industry to provide a better solution for extruded plant-based food products for humans or animals such as pets having a fibrous appearance with good juiciness, tenderness and taste properties.

The object of the present invention is to improve the state of the art or at least provide an alternative for a marinated extruded plant-based food product: i) a marinated extruded plant-based food product for humans or animals such as pets; ii) a marinated extruded plant-based food product with a high protein content; iii) a marinated extruded plant-based food product with a protein content above 15wt%, preferably above 25wt%; iv) a marinated extruded plant-based food product having a fibrous appearance with good juiciness and tenderness properties; v) a marinated extruded plant-based food product having good taste properties; vi) a marinated extruded plant-based food product having a fibrous appearance with good juiciness, tenderness and good taste properties; vii) a marinated extruded plant-based food product having a fibrous appearance with good juiciness, tenderness and taste properties with a reduced amount of flavours compared to a standard process.

The object of the present invention is achieved by the subject matter of the appended claims.

Accordingly, the present invention provides a process for preparing a marinated extruded plant-based food product, the process comprising the steps of:
a) feeding an extruder barrel with a composition comprising 40-70wt% water and 15-35 wt% plant protein;
b) extruding the composition from step a) above the texturization temperature of the plant protein, wherein the extruder barrels are heated to a temperature between 80-300°C;
c) pushing the composition from step b) after the last extruder barrel through a constriction;
d) cooling the composition from step c) through a cooling die;
e) marinating the obtained extruded composition of step d) with a marinade;
wherein the constriction reduces a cross-sectional area D_{constr} compared to a cross-sectional area before the constriction D_{before} between 30 to 95% and wherein a cross-sectional area after the constriction D_{after} is increased again.

Not being a part of the present invention is a process for preparing a marinated extruded plant-based food product, the process comprising the steps of:
a) feeding an extruder barrel with a composition comprising 40-70wt% water and 15-40wt% plant protein;
b) extruding the composition from step a) above the texturization temperature of the plant protein, wherein the extruder barrels are heated to a temperature between 80-300°C;
c) aerating the composition from step b) with a gas;
d) pushing the aerated composition from step c) after the last extruder barrel through a constriction;
e) cooling the aerated composition from step d) through a cooling die;
f) marinating the obtained aerated extruded composition of step e) with a marinade;
wherein the constriction reduces a cross-sectional area D_{constr} compared to a cross-sectional area before the constriction D_{before} between 30 to 95% and wherein a cross-sectional area after the constriction D_{after} is increased again.

Not being a part of the present invention is a process for preparing a marinated extruded plant-based food product, the process comprising the steps of:
a) feeding an extruder barrel with a composition comprising 40-70wt% water and 15-40wt% plant protein;
b) extruding the composition from step a) above the texturization temperature of the plant protein, wherein the extruder barrels are heated to a temperature between 80-300°C;
c) pushing the composition from step b) after the last extruder barrel through a constriction;
d) cooling the composition from step c) through a cooling die;
e) cutting the extruded composition from step d)
f) marinating the extruded composition of step e) with a marinade;
wherein the constriction reduces a cross-sectional area D_{constr} compared to a cross-sectional area before the constriction D_{before} between 30 to 95% and wherein a cross-sectional area after the constriction D_{after} is increased again.

Not being a part of the present invention is a process for preparing a marinated extruded plant-based food product, the process comprising the steps of:
a) feeding an extruder barrel with a composition comprising 40-70wt% water and 15-40wt% plant protein;
b) extruding the composition from step a) above the texturization temperature of the plant protein, wherein the extruder barrels are heated to a temperature between 80-300°C;
c) aerating the composition from step b) with a gas;
d) pushing the aerated composition from step c) after the last extruder barrel through a constriction;
e) cooling the aerated composition from step d) through a cooling die;
f) cutting the aerated extruded composition from step e)
g) marinating the aerated extruded composition of step f) with a marinade;
wherein the constriction reduces a cross-sectional area D_{constr} compared to a cross-sectional area before the constriction D_{before} between 30 to 95% and wherein a cross-sectional area after the constriction D_{after} is increased again.

It has been surprisingly found by the inventors that by using the above-mentioned process a marinated extruded plant-based food product having a fibrous appearance with good juiciness and tenderness properties can be obtained. The process of the present disclosure allows the continuous production of a marinated extruded plant-based food product that has the fibrous appearance of real meat with good juiciness and tenderness properties using extrusion and marination technology. It has now been found by the inventors that applying a constriction after the last extruder barrel and marinating an extrudate surprisingly has a beneficial effect regarding the fibrousness, juiciness and tenderness properties of a marinated extruded plant-based food product. The constriction after the last extruder barrel limits the cross-sectional area, which has an influence on the fiber alignment. A less dense product is achieved, which can be better marinated. In addition, a marinate comprising flavouring has a beneficial effect on the taste profile of the extrudate. Heat sensitive flavours, vitamins, minerals, colorant or a combination thereof can be used, which otherwise would not survive the harsh conditions of the extrusion process regarding high temperature and pressure. Marinate comprising starch increase the water holding capacity of the extrudate. By applying the aeration and the constriction a less dense product is achieved, having a foamier texture which can be better marinated. The aeration increases the porosity of the extrudate and deliver a lighter colour.

All percentages expressed herein are by weight of the total weight of the extruded plant-based food product unless expressed otherwise.

The terms "food," "food product" and "food composition" mean a product or composition that is intended for ingestion by an animal, including a human, and provides at least one nutrient to the animal or human. The present disclosure is not limited to a specific animal.

The terms "marinated" or "marinating" mean soaking foods in a seasoned liquid before cooking.

A "plant-based food product" is a composition in which meat (i.e. skeletal tissue and non-skeletal muscle from mammals, fish and fowl) and meat by-products (i.e. the non-rendered clean parts, other than meat, derived from slaughtered mammals, fowl or fish) are completely absent.

"Extrusion" is a process used to create objects of a fixed cross-sectional profile. A material is pushed or pulled through a die of the desired cross-section. The two main advantages of this process over other manufacturing processes are its ability to create very complex cross-sections, and to prepare products that are brittle, because the material only encounters compressive and shear stresses. High-moisture extrusion is known as wet extrusion. Extruders typically comprise an extruder barrel within which rotates a close-fitting screw. The screw is made up of screw elements, some of which are helical screw threads to move material through the extruder barrel. Material is introduced into the extruder barrel toward one end, moved along the extruder barrel by the action of the screw and is forced out of the extruder barrel through a nozzle or die at the other end. The rotating screw mixes and works the material in the barrel and compresses it to force it through the die or nozzle. The degree of mixing and work to which the material is subjected, the speed of movement of the material through the extruder barrel and thus the residence time in the extruder barrel and the pressure developed in the extruder barrel can be controlled by the pitch of the screw thread elements, the speed of rotation of the screw and the rate of introduction of material into the extruder barrel. The extruder barrel comprises multiple extruder barrel sections which are joined end to end. Multiple extruder barrel sections are required to carry out different processes involved in extrusion such as conveying, kneading, mixing, devolatilizing, metering and the like. Each extruder barrel section comprises a liner which is press fit into an extruder barrel casing, and heating and cooling elements are provided to regulate temperature of extruder barrel section within permissible range. The total length of an extrusion process can be defined by its modular extrusion barrel length. An extruder barrel is described by its unit of diameter.

The term "aerating" means that a gas is provided in an extruder by introducing the gas into an extruder. The gas can be provided into the extruder via a feed opening or by releasing the gas in the extruder due to a chemical reaction between a gas-forming compound and a gas releasing compound. Gas-forming compounds can be physiologically acceptable salts such as carbonates or hydrogen carbonates, for example, sodium carbonate (Na2CO3), potassium carbonate (K2CO3), or sodium hydrogen carbonate (NaHCO3), from which CO2 can be released. Another example is staghorn salt (a mixture of ammonium hydrogen carbonate (NH4HCO), ammonium carbonate ((NH4)2CO3) and ammonium carbamate (NH4CO2NH2)), from which the gases NH3, and CO2 can be released. The gas-releasing compound is usually a physiologically acceptable acid. The acid can be, for example, citric acid, a phosphoric acid compound such as disodium dihydrogen diphosphate or monocalcium orthophosphate, tartaric acid or one of its salts (such as potassium sodium tartrate (Rochelle salt), malic acid, fumaric acid, adipic acid or glucono delta-lactone. The acids can be used as free acids or in the form of their anhydrides or salts. Gas can be provided into the extruder via a feed opening of the extruder, which is connected to a gas container (such as a pressure bottle) and allows a controlled introduction of gas into the extruder (for example, via a valve). In an embodiment the gas is selected from the group consisting of CO2, N2, N2O, SO2, water steam or a combination thereof, preferably CO2, N2, N2O, SO2 or a combination thereof, more preferably CO2, N2 or a combination thereof. In an embodiment the amount of gas introduced into the extruder is between 0.009 to 3wt% (total weight of composition), preferably 0.009 to 1wt%, preferably 0.01 to 1wt%, preferably 0.009 to 0.5wt%, preferably 0.009 to 0.2wt%, preferably 0.009 to 0.1wt%.

The term "constriction" reduces temporary the inside cross-sectional area called D_{constr}. This has an influence on the laminar flow of the extrudate. By passing the constriction a turbulent flow is generated, which influences a fiber alignment of the extrudate. The obtained product is less dense having a more meat-like fibrous structure compared to a standard extrusion process without a constriction. A less dense extrudate can be better injected with an aqueous solution. The constriction is made of metal or a heat stable plastic material and can have any geometry. The constriction can be a side constriction or centered constriction. The term "temporary" means that before and after the constriction the cross-sectional area is larger. The cross-sectional area before the constriction is called D_{before}. The cross-sectional area after the constriction is called D_{after}. The cross-sectional area D_{constr} < D_{before} and D_{constr} < D_{after}. In an embodiment the cross-sectional area D_{before} = D_{after}. The constriction reduces the original cross-sectional area D_{before} compared to D_{constr} of between 30-95%, preferably between 40-90%

The constriction may be selected from a perforated aperture, a stud, a ripple, a slit, a breaker plate or a combination thereof. The constriction may be located after the last extruder barrel, preferably after the last extruder barrel and a first half of the length of the cooling die, preferably after the last extruder barrel and a first third length of a cooling die. In an embodiment the constriction is located after the last extrusion barrel at a composition viscosity between 1000-4000Pas-1. Not being part of the present invention is the constriction being located after the last extrusion barrel at a composition viscosity between 1500-4000Pas⁻¹, preferably at a composition viscosity between 2000-4000Pas⁻¹, preferably at a composition viscosity between 1000-3500Pas⁻¹, preferably at a composition viscosity between 1000-3000Pas⁻¹, preferably at a composition viscosity between 1000-2500Pas⁻¹, preferably at a composition viscosity between 1500-3500Pas⁻¹, preferably at a composition viscosity between 1500-3000Pas⁻¹, preferably at a composition viscosity between 1500-2500Pas⁻¹,preferably at a composition viscosity between 2000-4000Pas⁻¹, preferably at a composition viscosity between 2000-3000Pas⁻¹. The composition has been thermally pretreated by using a pressure cell equipped oscillatory rheometer (MCR702, Anton Paar) at a defined temperature (T=120-160°C, t=90s) to afterwards measure the viscosity in the same equipment at a shear rate of 0.1 s-1 at 100°C.

A "cooling die" is cooling the extruded product to a desired temperature.

The term "plant protein" includes "plant protein isolates" or "plant protein concentrates" or combination thereof. The person skilled in the art knows how to calculate the amount of plant protein within a plant protein concentrate or plant protein isolate. The term "plant protein concentrate" as used herein is a plant material having a protein content between 50-90% (plant protein on a moisture-free basis), preferably between 65-75% (plant protein on a moisture-free basis). Plant protein concentrate also contains plant fiber, typically from about 3.5% up to about 20% by weight on a moisture-free basis. The term plant protein isolate, as used herein is a plant material having a protein content of at least about 90% plant protein on a moisture free basis, preferably between 90-96% (plant protein on a moisture-free basis).

Plant protein include plant protein concentrate or plant protein isolate from pea protein, corn protein (e.g., ground corn or corn gluten), wheat protein (e.g., ground wheat or wheat gluten such as vital wheat gluten), potato protein, legume protein such as soy protein (e.g., soybean meal, soy concentrate, or soy isolate), rice protein (e.g., ground rice or rice gluten), barley protein, algae protein, hemp protein, oat protein, canola protein, fava protein or combinations thereof. Preferably the plant protein is wheat gluten, pea protein, canola protein, hemp protein, fava protein, soy protein or a combination thereof, more preferably pea protein, soy protein, wheat gluten or a combination thereof. An extruded plant-based food product comprises plant protein within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). An extruded plant-based food product comprises soy protein, pea protein, wheat gluten or a combination thereof within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). An extruded plant-based food product comprises a combination of soy or pea protein with wheat gluten within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). An extruded plant-based food product comprises soy protein and wheat gluten within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment the plant protein is selected from a combination of at least two different plant proteins, wherein said plant-based proteins comprise wheat gluten and at least one other plant protein selected from pea protein, soy protein, faba bean protein, and canola protein and wherein wheat gluten comprises between 20 to 70% of total plant protein in the plant protein mixture. A combination of wheat gluten and at least one other plant protein has the advantage of a softer texture resulting in an even more tender product.

An extruded plant-based food product comprises water within step a) in an amount of 40-70wt%, preferably 45-70wt%, preferably 45-65wt%, preferably 50-70wt%, preferably 50-65wt%, preferably 55-70wt%, preferably 55-65wt%.

An extruded plant-based food product of the invention comprises lipid in an amount of 1.5-10wt%, preferably 2-10wt%, preferably 2-8wt%, preferably 2-7wt%, preferably 3-8wt%, preferably 3-7wt%. Lipid can be added into the extrusion process and/or into a composition for marinating. The lipid is added into the extruder barrel at a location down-stream of the feeding location of step a). The process of lipid-injection is described in WO2016150834. Lipid can be also added into the aqueous solution of the marination.

The term lipid includes any liquid oil, fat or combination thereof. In an embodiment the term lipid include soybean oil, corn oil, sunflower oil, high oleic sunflower oil, olive oil, canola oil, safflower oil, peanut oil, palm oil, cottonseed oil, coconut oil, almond oil, hazelnut oil, rape seed oil, fractionated palm fat, fully or partially hydrogenated or inter-esterified palm oil and combinations thereof. Preferably the lipid is sunflower oil or rape seed oil.

The term "flavouring" in the context of this invention includes salt, flavouring agents, acids, taste enhancing ingredients, herbs, spices, vegetables or mixtures thereof, which are suitable for being used in a food product. Taste enhancing ingredients may be provided by monosodium glutamate (MSG) and/or yeast extract etc. Salt refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable. Acids may be provided by vinegar, lactic acid, citric acid or combination thereof. Flavouring can be added into the extrusion process and/or into a composition for marinating.

An extruded plant-based food product comprises flavouring in the amount of 0.5-40wt% (based on the total composition), preferably 0.5-35wt%, preferably 0.5-30wt%, preferably 0.5-25wt%.

The term "filler" in the content of this invention includes carbohydrates. Carbohydrates may be provided by starches, flours, sugars, maltodextrins, glucose syrups or combination thereof. The term "starch" includes also flours. Starches and/or flours include those from rice, wheat, corn, barley, and sorghum, potato, cassava, sweet potato, arrowroot, yam, pea, chickpea, mung beans or lentil or any combination thereof. An extruded plant-based food product comprises fillers in the range 0.5-10wt%, preferably 0.5-8wt%, preferably 0.5-7wt%, preferably 1-10wt%, preferably 1-8wt%, preferably 1-7wt%, preferably 1-5wt%, preferably 2-7wt%, preferably 0.5-6wt%, preferably 0.5-5wt%, preferably 0.5-4wt%, preferably 0.5-3wt%.

Starches can be added into the extrusion process and/or into the marinate. Adding starches into the marinate has a surprising effect, that the marinated extruded food composition has a better water holding capacity once the final product is cooked or fried.

An extruded plant-based food product comprises fibers in the range 0-15wt%, preferably 0-12wt%, preferably 0-10wt%, preferably 0-8wt%, preferably 0.1-15wt%, preferably 0.1-10wt%, preferably 0.1-8wt%, preferably 0.1-5wt%, preferably 1-15wt%, preferably 1-12wt%, preferably 1-10wt%, preferably 1-8wt%, preferably 5-15wt%. "Fibers" according to this invention in the extrusion process are dietary fibers, preferably a water insoluble vegetable dietary fiber. Dietary fiber consists of the remnants of edible plant cells, polysaccharides, lignin and associated substances resistant to (hydrolysis) digestion by the alimentary enzymes of humans. The dietary fibers are from vegetables, fruits, cereal or combinations thereof. Dietary fibers are selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus, bean, fava bean, lentil, chickpea, peas, lupin, vetches or combinations thereof, preferably carrot, beetroot, pumpkin, citrus, wheat, oat, bamboo, tomato or combinations thereof.

An extruded plant-based food product comprises one or more fortification compounds as vitamins, minerals and iron salts. The term vitamins include Vitamins A, B-complex (such as B-1, B-2, B-6 and B-12), C, D, E and K, niacin, and acid vitamins such as pantothenic acid, folic acid and biotin, preferably vitamin B-12. The term minerals include calcium, iron, zinc, magnesium, iodine, copper, phosphorus, manganese, potassium, chromium, molybdenum, selenium, nickel, tin, silicon or vanadium. The term iron salts include ferric sodium EDTA, reduced iron, ferrous lactate, ferric citrate, ferric pyrophosphate, ferrous sulphate monohydrate or ferric ammonium citrate brown, preferably ferric pyrophosphate. Specific amounts of fortification compounds will depend on a variety of factors such as the identity of the ingredient; the species of animal; the animal's age, body weight, general health, sex, and diet; the animal's consumption rate; the purpose for which the food product is administered to the animal; and the like. Therefore, the components and their amounts may vary widely. Fortification compounds can be added into the extrusion process and/or into a composition for marinating.

An extruded plant-based food product can also comprise one or more colorants. The term colorant include FD&C colors, such as blue no. 1, blue no. 2, green no. 3, red no. 3, red no. 40, yellow no. 5, yellow no. 6, and the like; natural colorants and/or coloring food stuff, such as caramel coloring, annatto, chlorophyllin, cochineal, betanin, turmeric, saffron, paprika, lycopene, elderberry juice, pandan, butterfly pea and the like; titanium dioxide; carbon carbonate; and any suitable food colorant known to the skilled artisan. The colorant is selected from bell pepper, beetroot, carrot, black current, malted barley powder or combination thereof. A meat analogue product comprises between 0.1-10wt% (weight percent of the total composition) of colorants, preferably between 0.1-5wt% (weight percent of the total composition). Colorants can be added into the extrusion process and/or into a composition for marinating. Due to the heat sensitivity of the many colorants, the colorants are preferably added into a composition for marinating.

An extruded plant-based food product has a protein content of at least 15wt%, preferably at least 20wt%, preferably at least 25wt%. An extruded plant-based food product has a protein content between 15-40wt% (based on the total composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the total composition).

Water might be mixed to a dry plant protein before feeding the extruder barrels through a slurry inlet. In case the plant protein is mixed with water before feeding the extruder barrel, the non-meat dough can be transferred, for example by pumping, from the mixing device. The non-meat dough is transferred directly from the mixing device to the extruder barrel without any other processing or addition or removal of ingredients.

In a further embodiment plant protein in the form of a dry powder is added to the extruder barrel and water is added separately to the extruder barrel. The mixing of the dry plant protein and water is done within the extruder barrel through the mechanical energy forced. Therefore, it is not necessary to form a dough of the plant protein and water before feeding the extruder barrel.

The extruder barrels are heated to a temperature of between 70-300°C, preferably 80-200°C, preferably 90-190°C. The pressure on the front plate (between last extruder barrel and cooling die) is between 10-40 bar, preferably 10-30 bar, preferably 10-20 bar. The screw speed is around 50-600rpm, preferably 50-500rpm, preferably 100-600rpm, preferably 200-600rpm, preferably between 200-500rpm, preferably between 200-400rpm.

During the cooling within the cooling die both the temperature and the pressure are gradually reduced as the heated non-meat dough travels through the cooling device. The dough has moisture and is under elevated temperature, so preferably moisture flashing is controlled to avoid rapid expansion of the food product. Product expansion that is too rapid can disrupt the structure of the texturized food product. However, depending on the desired image of the final food product, some flashing may be required to reduce the temperature of the centre of the food product and/or to expose some of the fibers in the food product. Flashing can be avoided.

In an embodiment, the An extruded mixture undergoes a decrease in pressure at a predetermine rate in the cooling device and/or is subjected to a predetermined final pressure at the end of the cooling device. The extruded mixture has an exit temperature at the end of the cooling die between 40-110°C, preferably between 50-100°C, preferably between 50-98°C, preferably between 60-95°C, preferably between 60-90°C, preferably between 65-98°C, preferably between 65-95°C, preferably between 65-90°C, preferably between 70-90°C.

After cooling within the cooling die the extruded composition is marinated. After cooling within the cooling die the extruded composition is marinated with marinade. In an embodiment of the invention 5-55wt% (based on total composition) of the marinade is added to the extruded composition (based on total composition).

In an embodiment of the invention the marinade is a water-based marinade. A water-based marinade comprises at least one of the ingredients selected from flavouring, hydrocolloid, starch, protein, dietary fiber, vitamin, mineral, colorant, lipid or a combination thereof, preferably at least one of the ingredients selected from flavouring, hydrocolloid, starch, lipid, protein, dietary fiber or a combination thereof, more preferably at least one of the ingredients selected from flavouring, lipid, hydrocolloid, starch or a combination thereof. A water-based marinade comprises at least one further ingredient selected 0.1-40wt% of flavouring (based on the water-based marinade), 0.01-10wt% of hydrocolloid (based on the water-based marinade), 0.0001-5wt% of vitamin (based on the water-based marinade), 0.0001-5wt% of mineral (based on the water-based marinade), 0.01-10wt% of colorant (based on the water-based marinade), 0.1-7wt% of starch (based on the water-based marinade), 0.01-5wt% of protein (based on the water-based marinade), 0.01-5wt% of dietary fiber (based on the water-based marinade), 0.01-30wt% of lipid (based on the water-based marinade) or a combination thereof.

A marinade comprises 5-40wt% of flavouring (based on the marinade) and 30-90wt% of water (based on the marinade). A marinade comprises water, lipid and flavouring.

A marinade comprises 5-40wt% of flavouring (based on the marinade), 1-30wt% of lipid (based on the marinade) and 30-90wt% of water (based on the marinade). A marinade further comprises starch. A marinade comprises water, starch and flavouring. A marinade comprises 5-40wt% of flavouring (based on the marinade), 0.1-7wt% starch (based on the marinade) and 30-90wt% of water (based on the marinade).

A marinade comprises water, lipid, starch and flavouring. A comprises 5-40wt% of flavouring (based on the marinade), 1-30wt% of lipid (based on the marinade), 0.1-7wt% starch (based on the marinade) and 30-90wt% of water (based on the marinade).

The amount of flavouring in a marinade is between 5-40wt% (based on the marinade), preferably between 10-40wt%, preferably between 10-35wt%, preferably between 10-30wt% (based on the marinade). The amount of lipid in a marinade is between 1-30wt% (based on the marinade), preferably between 2-30wt%, preferably between 3-30wt%, preferably between 5-30wt%, preferably between 7-30wt%, preferably between 10-30wt%, preferably between 5-25wt%, preferably between 7-25wt%, preferably between 10-25wt% (based on the marinade). The amount of water in a marinade is between 30-90wt% (based on the marinade), preferably between 35-90wt%, preferably between 35-85wt%, preferably between 35-80wt%, preferably between 35-75wt%, preferably between 35-70wt%, preferably between 35-65wt%, preferably between 40-90wt%, preferably between 40-85wt%, preferably between 40-80wt%, preferably between 40-75wt%, preferably between 40-70wt%, preferably between 40-65wt% (based on the marinade).

In an embodiment of the invention the temperature of the marinade is between -5 to 38°C. Temperatures of the marinade not being part of the present invention are between -5 to 35°C, preferably between -5 to 25°C, preferably between -5 to 20°C, preferably between -5 to 15°C, preferably between -5 to 10°C, preferably between -5 to 5°C; preferably between 0-35°C, preferably between 0-25°C, preferably between 0-20°C, preferably between 0-15°C, prefer-ably between 0-10°C, preferably between 0-5°C; preferably between 1-35°C, preferably between 1-25°C, preferably between 1-15°C, preferably between 1-10°C, preferably between 1-5°C. Surprisingly, it has been found as an advantage to use this temperature range to additionally cool the extruded product by marination, especially as the marinated extruded products are often frozen afterwards. Marination at this temperature range will shorten the freezing time needed afterwards. The temperature of the marinate can be below 0°C due to ions like NaCl in the aqueous solution. In addition, heat sensitive ingredients like starch and/or colorants can be added to the marinate.

The term "cutting" means that the extruded plant-based food product can be sliced, cut, ground, shredded, grated or a combination thereof, preferably sliced or cut. Cutting can be done with static, rotating or vibrating knives having vertical, horizontal and/or diagonal knives, depending on the shape of the food product to be manufactured. The cutting of the extruded composition can be done after processing step d).

Those skilled in the art will understand that they can freely combine all features of the present invention disclosed herein. In particular, features described for the composition of the present invention may be combined with the process for the preparation of the composition, and vice versa. Further, features described for different embodiments of the present invention may be combined. Further advantages and features of the present invention are apparent from the examples. It will be appreciated that the invention as claimed is not intended to be limited in any way by these examples.

### EXAMPLES

### Example 1-4:

The examples are describing the preparation of a marinated extruded plant-based food product by the process of this invention. A dry mix of the plant protein was added through a hopper into the extruder barrel and water is separately injected into the extruder. The extruder barrels are heated within a curve between 80-180°C. After the last extruder barrel a constriction D_{constr} has been used for examples 2 and 4 to reduce the cross-sectional area D_{before} to 60%. After the constriction the cross-sectional area is increase again to D_{after}. For examples 1 and 3 no constriction has been used. The cooling die is cooling the extruded mixture to an exit temperature of 80°C. The extruded product is cut, and marinated. The extrudate was made on a Bühler B93 twin screw extruder from the following materials:

| | | Comp. ex 1 (no constr. and no marination) | Comp. ex 2 (no marination) | Comp ex 3 (no constr.) | Ex 4 |
|---|---|---|---|---|---|
| Extrusion process to obtain extrudate | Water [wt%] | 57 | 57 | 57 | 57 |
| | Soy Protein concentrate [wt%] | 22 | 22 | 22 | 22 |
| | Wheat Gluten [wt%] | 18 | 18 | 18 | 18 |
| | Flavouring [wt%] | 3 | 3 | 3 | 3 |
| Composition of marinade | Water [wt%] | - | - | 55 | 55 |
| | Sunflower oil [wt%] | - | - | 16 | 16 |
| | Flavouring [wt%] | - | - | 29 | 29 |
| Amount of marinate on extrudate [wt%] | | 0 | 0 | 25 | 25 |

Comparison example 1 shows no changed cross-sectional dimension after the last extruder barrel and no marination of the extrudate. Comparison example 2 has a changed cross-sectional dimension after the last extruder barrel but no marination of the extrudate. Comparison example 3 shows no changed cross-sectional dimension after the last extruder barrel but marination of the extrudate. Example 4 has a changed cross-sectional dimension after the last extruder barrel and marination of the extrudate.

8 internal experienced panelists were used to rate the sensory attributes of the examples. Therefore, the examples have been pan-fried before tasting. Comparison example 1 is described as a dry product missing juiciness and tenderness. The texture is a fibrous layered structure difficult to tear apart and less meat like. Comparison example 2 has been perceived as dry as comparison example 1, also missing juiciness and tenderness, but the texture is more as meat like and easier to tear apart. Comparison example 3 is juicier and more tender compared to comparison examples 1 and 2, but the texture is very similar to comparison example 1 and therefore it is also difficult to tear apart the product. Example 4 has been received as best example as being juicy, tender and having also a good texture with good tearing apart attributes and more as meat like.

### Examples 5 to 7: Different cross-sectional areas of D_{constr}

Following the process and composition of example 4 an extruded product has been obtained by varying different changed cross-sectional dimension sizes of D_{constr} compared to D_{before}. Afterwards the corresponding texture has been evaluated.

| | Comp Ex. 5 | Ex. 6 | Ex. 7 |
|---|---|---|---|
| D_{constr} compared to D_{before} [in %] | 25 | 35 | 80 |
| Visual effect and tearing apart | Very small visual effect, still layered structure and difficult to tear apart | Visual effect can be seen, more meat like structure, tearing apart acceptable | Big visual impact, meat like structure, easy to tear apart |

### Example 8:

Following in principle the process of example 4 an extruded product has been obtained by adding in addition N2 to an extruder barrel with a gas supply unit having a flowmeter with a flow control (Bronkhorst). The extrudate has been marinated with a composition consisting of water, starch and flavors.

| | | Example 8 |
|---|---|---|
| Extrusion process to obtain extrudate | Water [wt%] | 56.97 |
| | Soy Protein concentrate [wt%] | 22 |
| | Wheat Gluten [wt%] | 18 |
| | Flavouring [wt%] | 3 |
| | N2 [wt%] | 0.03 |
| Composition of marinade | Water [wt%] | 73 |
| | Starch [wt%] | 2 |
| | Flavouring [wt%] | 25 |
| Amount of marinate on extrudate [wt%] | | 30 |

Example 8 has been rated by 8 internal experienced panelists very similar to example 4, as being juicy, tender and having also a good texture with good tearing apart attributes and more as meat like and in addition having a foamier (fluffier) texture.

### Example 9:

Following the process of example 4 an extruded product has been obtained. The extrudate has been marinated with a composition consisting of water, lipid, starch, and flavors.

| | | Example 9 |
|---|---|---|
| | Water [wt%] | 56.97 |
| Extrusion process to obtain extrudate | Soy Protein concentrate [wt%] | 22 |
| | Wheat Gluten [wt%] | 18 |
| | Flavouring [wt%] | 3 |
| | N2 [wt%] | 0.03 |
| Composition of marinade | Water [wt%] | 55 |
| | Sunflower oil [wt%] | 15 |
| | Starch [wt%] | 2 |
| | Flavouring [wt%] | 28 |
| Amount of marinate on extrudate [wt%] | | 25 |

Example 9 has been rated by 8 internal experienced panelists in comparison to example 4. Both samples have the same good texture with good tearing apart attributes of the extrudate. Nevertheless example 9 having starch in the composition of the marinate has been received as even better example as being even more juicy and tender compared to example 4. It seems the starch in example 9 further increases the water holding capacity of the final product after cooking.

## Claims

1. A process for preparing a marinated extruded plant-based food product, the process comprising the steps of:
a) feeding an extruder barrel with a composition comprising 40-70wt% water and 15-35wt% plant protein;
b) extruding the composition from step a) above the texturization temperature of the plant protein, wherein the extruder barrels are heated to a temperature between 80-300°C;
c) pushing the composition from step b) after the last extruder barrel through a constriction;
d) cooling the composition from step c) through a cooling die;
e) marinating the obtained extruded composition of step d) with a marinade;
wherein the constriction reduces a cross-sectional area D_{constr} compared to a cross-sectional area before the constriction D_{before} between 30 to 95% and wherein a cross-sectional area after the constriction D_{after} is increased again.

2. The process for preparing a marinated extruded plant-based food product according to claim 1, wherein the extruded plant-based food product does not comprise protein from an animal source.

3. The process for preparing a marinated extruded plant-based food product according to any one of the claims 1 to 2, wherein the plant protein is selected from soy protein, pea protein, canola protein, hemp protein, oat protein, fava protein or wheat gluten, or a combination thereof.

4. The process for preparing a marinated extruded plant-based food product according to any one of the claims 1 to 3, wherein the plant protein is selected from a combination of at least two different plant proteins, wherein said plant proteins comprise wheat gluten and at least one other plant protein selected from pea protein, soy protein, faba bean protein, and canola protein and wherein wheat gluten comprises between 20 to 70% of total plant protein in the plant protein mixture.

5. The process for preparing a marinated extruded plant-based food product according to one of the claims 1 to 4, wherein the extruder barrels are heated to a temperature between 80-150°C.

6. The process for preparing a marinated extruded plant-based food product according to one of the claims 1 to 5, wherein the constriction reduces the cross-sectional area D_{constr} compared to the cross-sectional area before the constriction D_{before} between 40 to 90%.

7. The process for preparing a marinated extruded plant-based food product according to one of the claims 1 to 6, wherein the changed cross-sectional dimension is located after the last extrusion barrel at a composition viscosity between 1000-4000Pas-1, the viscosity being measured by a pressure cell equipped oscillatory rheometer (MCR702, Anton Paar) at a shear rate of 0.1 s-1 at 100°C.

8. The process for preparing a marinated extruded plant-based food product according to any one of the claims 1 to 7, wherein the extruded composition has an exit temperature at the end of the cooling die between 50-110°C.

9. The process for preparing a marinated extruded plant-based food product according to any one of the claims 1 to 8 further comprises a cutting of the extruded composition after step c) or step d).

10. The process for preparing a marinated extruded plant-based food product according to any one of the claims 1 to 9, wherein 5-55wt% (based on total composition) of the marinade is added to the extruded composition.

11. The process for preparing a marinated extruded plant-based food product according to any one of the claims 1 to 10, wherein the marinade has a temperature between -5 to 38°C.

12. The process for preparing a marinated extruded plant-based food product according to any one of the claims 1 to 11, wherein the marinade is a water-based marinade

13. The process for preparing a marinated extruded plant-based food product according to claim 12, wherein the water-based marinade comprises at least one further ingredient selected from 0.1-40wt% of flavouring (based on the water-based marinade), 0.01-5wt% of hydrocolloid (based on the water-based marinade), 0.1-7wt% of starch (based on the water-based marinade), 0.01-5wt% of protein (based on the water-based marinade), 0.01-5wt% of fiber (based on the water-based marinade), 0.01-30wt% of lipid (based on the water-based marinade), 0.0001-5wt% of vitamin (based on the water-based marinade), 0.0001-5wt% of mineral (based on the water-based marinade), 0.01-10wt% of colorant (based on the water-based marinade) or a combination thereof.

14. The process for preparing a marinated extruded plant-based food product according to any one of the claims 1 to 13, wherein the process further comprises aerating the composition between step b) and c) with a gas in an amount between 0.009 to 3wt%.

15. The process for preparing a marinated extruded plant-based food product according to claim 14, wherein the gas is selected from CO2, N2, N2O, SO2, water steam or a combination thereof.

## Patentansprüche

1. Verfahren zum Herstellen eines marinierten extrudierten Nahrungsmittelprodukts auf Pflanzenbasis, das Verfahren umfassend die Schritte:
a) Beschicken eines Extruderzylinders mit einer Zusammensetzung umfassend zu 40-70 Gew.-% Wasser und zu 15-35 Gew.-% Pflanzenprotein;
b) Extrudieren der Zusammensetzung aus Schritt a) oberhalb der Texturierungstemperatur des Pflanzenproteins, wobei die Extruderzylinder auf eine Temperatur zwischen 80-300 °C erhitzt werden;
c) Drücken der Zusammensetzung aus Schritt b) nach dem letzten Extruderzylinder durch eine Verengung;
d) Abkühlen der Zusammensetzung aus Schritt c) durch eine Kühldüse;
e) Marinieren der erhaltenen extrudierten Zusammensetzung aus Schritt d) mit einer Marinade;
wobei die Verengung eine Querschnittsfläche D_{Vereng} im Vergleich zu einer Querschnittsfläche vor der Verengung Dᵥₒᵣ um zwischen 30 und 95 % reduziert, und wobei eine Querschnittsfläche nach der Verengung D_{nach} wieder vergrößert wird.

2. Verfahren zum Herstellen eines marinierten extrudierten Nahrungsmittelprodukts auf Pflanzenbasis nach Anspruch 1, wobei das extrudierte Nahrungsmittelprodukt auf Pflanzenbasis kein Protein tierischen Ursprungs umfasst.

3. Verfahren zum Herstellen eines marinierten extrudierten Nahrungsmittelprodukts auf Pflanzenbasis nach einem der Ansprüche 1 bis 2, wobei das Pflanzenprotein aus Sojaprotein, Erbsenprotein, Rapsprotein, Hanfprotein, Haferprotein, Favaprotein oder Weizengluten oder einer Kombination davon ausgewählt ist.

4. Verfahren zum Herstellen eines marinierten extrudierten Nahrungsmittelprodukts auf Pflanzenbasis nach einem der Ansprüche 1 bis 3, wobei das Pflanzenprotein aus einer Kombination von mindestens zwei unterschiedlichen Pflanzenproteinen ausgewählt ist, wobei die Pflanzenproteine Weizengluten und mindestens ein anderes Pflanzenprotein umfassen, das aus Erbsenprotein, Sojaprotein, Ackerbohnenprotein und Rapsprotein ausgewählt ist, und wobei Weizengluten zwischen 20 und 70 % des gesamten Pflanzenproteins in der Pflanzenproteinmischung umfasst.

5. Verfahren zum Herstellen eines marinierten extrudierten Nahrungsmittelprodukts auf Pflanzenbasis nach einem der Ansprüche 1 bis 4, wobei die Extruderzylinder auf eine Temperatur zwischen 80-150 °C erhitzt werden.

6. Verfahren zum Herstellen eines marinierten extrudierten Nahrungsmittelprodukts auf Pflanzenbasis nach einem der Ansprüche 1 bis 5, wobei die Verengung die Querschnittsfläche D_{Vereng} im Vergleich zu der Querschnittsfläche vor der Verengung Dᵥₒᵣ um zwischen 40 bis 90 % reduziert.

7. Verfahren zum Herstellen eines marinierten extrudierten Nahrungsmittelprodukts auf Pflanzenbasis nach einem der Ansprüche 1 bis 6, wobei sich die veränderte Querschnittsabmessung nach dem letzten Extrusionszylinder bei einer Zusammensetzungsviskosität zwischen 1000-4000 Pas⁻¹ befindet, wobei die Viskosität durch ein mit einer Druckzelle ausgerüstetes Oszillationsrheometer (MCR702, Anton Paar) bei einer Schergeschwindigkeit von 0,1 s⁻¹ bei 100 °C gemessen wird.

8. Verfahren zum Herstellen eines marinierten extrudierten Nahrungsmittelprodukts auf Pflanzenbasis nach einem der Ansprüche 1 bis 7, wobei die extrudierte Zusammensetzung eine Austrittstemperatur an dem Ende der Kühldüse zwischen 50-110 °C aufweist.

9. Verfahren zum Herstellen eines marinierten extrudierten Nahrungsmittelprodukts auf Pflanzenbasis nach einem der Ansprüche 1 bis 8, das ferner ein Schneiden der extrudierten Zusammensetzung nach Schritt c) oder Schritt d) umfasst.

10. Verfahren zum Herstellen eines marinierten extrudierten Nahrungsmittelprodukts auf Pflanzenbasis nach einem der Ansprüche 1 bis 9, wobei zu 5-55 Gew.-% (bezogen auf die gesamte Zusammensetzung) der Marinade der extrudierten Zusammensetzung zugegeben wird.

11. Verfahren zum Herstellen eines marinierten extrudierten Nahrungsmittelprodukts auf Pflanzenbasis nach einem der Ansprüche 1 bis 10, wobei die Marinade eine Temperatur zwischen -5 und 38 °C aufweist.

12. Verfahren zum Herstellen eines marinierten extrudierten Nahrungsmittelprodukts auf Pflanzenbasis nach einem der Ansprüche 1 bis 11, wobei die Marinade eine Marinade auf Wasserbasis ist.

13. Verfahren zum Herstellen eines marinierten extrudierten Nahrungsmittelprodukts auf Pflanzenbasis nach Anspruch 12, wobei die Marinade auf Wasserbasis mindestens einen weiteren Inhaltsstoff umfasst, der aus zu 0,1-40 Gew.-% Aromastoff (bezogen auf die Marinade auf Wasserbasis), zu 0,01-5 Gew.-% Hydrokolloid (bezogen auf die Marinade auf Wasserbasis), zu 0,1-7 Gew.-% Stärke (bezogen auf die Marinade auf Wasserbasis), zu 0,01-5 Gew.-% Protein (bezogen auf die Marinade auf Wasserbasis), zu 0,01-5 Gew.-% Ballaststoffe (bezogen auf die Marinade auf Wasserbasis), zu 0,01-30 Gew.-% Lipid (bezogen auf die Marinade auf Wasserbasis), zu 0,0001-5 Gew.-% Vitamin (bezogen auf die Marinade auf Wasserbasis), zu 0,0001-5 Gew.-% Mineralstoff (bezogen auf die Marinade auf Wasserbasis), zu 0,01-10 Gew.-% Farbstoff (bezogen auf die Marinade auf Wasserbasis) oder einer Kombination davon ausgewählt ist.

14. Verfahren zum Herstellen eines marinierten extrudierten Nahrungsmittelprodukts auf Pflanzenbasis nach einem der Ansprüche 1 bis 13, wobei das Verfahren ferner ein Belüften der Zusammensetzung zwischen Schritt b) und c) mit einem Gas in einer Menge zwischen 0,009 und 3 Gew.-% umfasst.

15. Verfahren zum Herstellen eines marinierten extrudierten Nahrungsmittelprodukts auf Pflanzenbasis nach Anspruch 14, wobei das Gas aus CO2, N2, N2O, SO2, Wasserdampf oder einer Kombination davon ausgewählt ist.

## Revendications

1. Procédé permettant de préparer un produit alimentaire extrudé d'origine végétale mariné, le procédé comprenant les étapes consistant à :
a) alimenter un cylindre d'extrusion d'une composition comprenant de 40 à 70 % en poids d'eau et de 15 à 35 % en poids de protéine végétale ;
b) extruder la composition de l'étape a) au-dessus de la température de texturation de la protéine végétale, dans lequel les cylindres d'extrusion sont chauffés à une température comprise entre 80 et 300 °C ;
c) pousser la composition provenant de l'étape b) après le dernier cylindre d'extrusion à travers un étranglement ;
d) refroidir la composition provenant de l'étape c) à travers une matrice de refroidissement ;
e) mariner la composition extrudée obtenue à l'étape d) avec une marinade ;
dans lequel l'étranglement réduit une zone en coupe transversale D_{constr} par comparaison avec une zone en coupe transversale avant l'étranglement Dₐᵥₐₙₜ entre 30 et 95 % et dans lequel une zone en coupe transversale après l'étranglement D_{après} est augmentée de nouveau.

2. Procédé permettant de préparer un produit alimentaire extrudé d'origine végétale mariné selon la revendication 1, dans lequel le produit alimentaire extrudé d'origine végétale ne comprend pas de protéine provenant d'une source animale.

3. Procédé permettant de préparer un produit alimentaire extrudé d'origine végétale mariné selon l'une quelconque des revendications 1 à 2, dans lequel la protéine végétale est choisie parmi de la protéine de soja, de la protéine de pois, de la protéine de colza, de la protéine de chanvre, de la protéine d'avoine, de la protéine de fève ou du gluten de blé, ou une combinaison de ceux-ci.

4. Procédé permettant de préparer un produit alimentaire extrudé d'origine végétale mariné selon l'une quelconque des revendications 1 à 3, dans lequel la protéine végétale est choisie parmi une combinaison d'au moins deux protéines végétales différentes, dans lequel lesdites protéines végétales comprennent du gluten de blé et au moins une autre protéine végétale choisie parmi de la protéine de pois, de la protéine de soja, de la protéine de féverole et de la protéine de colza et dans lequel le gluten de blé comprend entre 20 et 70 % de la protéine végétale totale dans le mélange de protéines végétales.

5. Procédé permettant de préparer un produit alimentaire extrudé d'origine végétale mariné selon l'une des revendications 1 à 4, dans lequel les cylindres d'extrusion sont chauffés à une température comprise entre 80 et 150 °C.

6. Procédé permettant de préparer un produit alimentaire extrudé d'origine végétale mariné selon l'une des revendications 1 à 5, dans lequel l'étranglement réduit la zone en coupe transversale D_{constr} par comparaison avec la zone en coupe transversale avant l'étranglement Dₐᵥₐₙₜ entre 40 et 90 %.

7. Procédé permettant de préparer un produit alimentaire extrudé d'origine végétale mariné selon l'une des revendications 1 à 6, dans lequel la dimension en coupe transversale modifiée est située après le dernier cylindre d'extrusion à une viscosité de composition comprise entre 1 000 et 4 000 Pa.s-1, la viscosité étant mesurée par un rhéomètre oscillatoire équipé de cellule de pression (MCR702, Anton Paar) à un taux de cisaillement de 0,1 s-1 à 100 °C.

8. Procédé permettant de préparer un produit alimentaire extrudé d'origine végétale mariné selon l'une quelconque des revendications 1 à 7, dans lequel la composition extrudée a une température de sortie au niveau de l'extrémité de la matrice de refroidissement comprise entre 50 et 110 °C.

9. Procédé permettant de préparer un produit alimentaire extrudé d'origine végétale mariné selon l'une quelconque des revendications 1 à 8, comprend en outre une découpe de la composition extrudée après l'étape c) ou l'étape d).

10. Procédé permettant de préparer un produit alimentaire extrudé d'origine végétale mariné selon l'une quelconque des revendications 1 à 9, dans lequel de 5 à 55 % en poids (en fonction de la composition totale) de la marinade sont ajoutés à la composition extrudée.

11. Procédé permettant de préparer un produit alimentaire extrudé d'origine végétale mariné selon l'une quelconque des revendications 1 à 10, dans lequel la marinade a une température comprise entre -5 et 38 °C.

12. Procédé permettant de préparer un produit alimentaire extrudé d'origine végétale mariné selon l'une quelconque des revendications 1 à 11, dans lequel la marinade est une marinade à base d'eau.

13. Procédé permettant de préparer un produit alimentaire extrudé d'origine végétale mariné selon la revendication 12, dans lequel la marinade à base d'eau comprend au moins un ingrédient supplémentaire choisi parmi 0,1 à 40 % en poids d'arôme (en fonction de la marinade à base d'eau), 0,01 à 5 % en poids d'hydrocolloïde (en fonction de la marinade à base d'eau), 0,1 à 7 % en poids d'amidon (en fonction de la marinade à base d'eau), 0,01 à 5 % en poids de protéine (en fonction de la marinade à base d'eau), 0,01 à 5 % en poids de fibre (en fonction de la marinade à base d'eau), 0,01 à 30 % en poids de lipide (en fonction de la marinade à base d'eau), 0,0001 à 5 % en poids de vitamine (en fonction de la marinade à base d'eau), 0,0001 à 5 % en poids de minéral (en fonction de la marinade à base d'eau), 0,01 à 10 % en poids de colorant (en fonction de la marinade à base d'eau) ou une combinaison de ceux-ci.

14. Procédé permettant de préparer un produit alimentaire extrudé d'origine végétale mariné selon l'une quelconque des revendications 1 à 13, dans lequel le procédé comprend en outre l'aération de la composition entre les étapes b) et c) avec un gaz en une quantité comprise entre 0,009 et 3 % en poids.

15. Procédé permettant de préparer un produit alimentaire extrudé d'origine végétale mariné selon la revendication 14, dans lequel le gaz est choisi parmi le CO2, N2, N2O, SO2, la vapeur d'eau ou une combinaison de ceux-ci.
